# EUROPEAN PATENT APPLICATION

(11) **EP 4 764 790 A1**
(43) Date of publication of application: **24.06.2026**
(21) Application number: 24855630.0
(22) Date of filing: 12.08.2024
(51) Int. Cl.: G06F 3/01

(54) **HAPTIC SIGNAL PROCESSING METHOD AND APPARATUS, AND ELECTRONIC DEVICE**

(30) Priority: 18.08.2023 CN 202311049378
(71) Applicant: Vivo Mobile Communication Co., Ltd., Dongguan, Guangdong 523863 (CN)
(72) Inventor: WANG, Huan, Dongguan, Guangdong 523863 (CN); LV, Zhuoyi, Dongguan, Guangdong 523863 (CN)
(74) Representative: Studio Torta S.p.A.
(86) International application number: PCT/CN2024/111325
(87) International publication number: WO 2025/039904

(57) **Abstract**

The present application discloses a haptic signal processing method, a haptic signal processing apparatus, and an electronic device, and pertains to the field of communication technologies. The haptic signal processing method in the embodiments of the present application includes: in a case that a first element triggers haptic feedback, determining, by an electronic device, a haptic signal and metadata of the haptic signal; executing, by the electronic device, a first operation based on the haptic signal and the metadata of the haptic signal; where the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

## Description

### CROSS-REFERENCE TO RELATED AP PLICATIONS

The present application claims priority to Chinese Patent Application No. 202311049378.6 filed on August 18, 2023, which is incorporated herein by reference in its entirety.

### TECHNICAL FIELD

The present application pertains to the field of communication technologies, and specifically relates to a haptic signal processing method, a haptic signal processing apparatus, and an electronic device.

### BACKGROUND

Extended reality (Extended Reality, XR) technology is used to integrate the real and the virtual, including, but not limited to, at least one of technologies such as virtual reality (Virtual Reality, VR), augmented reality (Augmented Reality, AR), and mixed reality (Mixed Reality, MR). To improve interaction between a user and a virtual environment, haptic scenes are introduced to an XR scene, and in a haptic scene, haptic feedback can be provided to a user avatar, for example, a trigger signal is generated and the trigger signal is played. However, in the related art, a haptic signal is generated only when haptic feedback is triggered, and there is no related solution for how to determine metadata of the haptic signal, which may easily lead to suboptimal haptic feedback.

### SUMMARY

Embodiments of the present application provide a haptic signal processing method, a haptic signal processing apparatus, and an electronic device, so as to provide a manner of determining metadata of a haptic signal, improving haptic feedback effects.

In a first aspect, a haptic signal processing method is provided, and the method includes:
determining, by an electronic device, a haptic signal and metadata of the haptic signal in a case that a first element triggers haptic feedback; and
executing, by the electronic device, a first operation based on the haptic signal and the metadata of the haptic signal; where
the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

In a second aspect, a haptic signal processing apparatus is provided, and the apparatus includes:
a first determination module, configured to, in a case that a first element triggers haptic feedback, determine a haptic signal and metadata of the haptic signal;
an execution module, configured to execute a first operation based on the haptic signal and the metadata of the haptic signal; where
the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

In a third aspect, an electronic device is provided, where the electronic device includes a processor and a memory, the memory stores a program or an instruction capable of running on the processor, and when the program or the instruction is executed by the processor, the steps of the method according to the first aspect are implemented.

In a fourth aspect, an electronic device is provided, including a processor and a communication interface, where the processor is configured to determine a haptic signal and metadata of the haptic signal in a case that a first element triggers haptic feedback; and execute a first operation based on the haptic signal and the metadata of the haptic signal; where the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

In a fifth aspect, a readable storage medium is provided, where the readable storage medium stores a program or an instruction, and when the program or the instruction is executed by a processor, the steps of the method according to the first aspect are implemented.

In a sixth aspect, a chip is provided, where the chip includes a processor and a communication interface, the communication interface is coupled to the processor, and the processor is configured to run a program or an instruction to implement the steps of the method according to the first aspect.

In a seventh aspect, a computer program/program product is provided, where the computer program/program product is stored in a storage medium, and when the computer program/program product is executed by at least one processor, the steps of the method according to the first aspect are implemented.

In the embodiments of the present application, in a case that a first element triggers haptic feedback, an electronic device determines a haptic signal and metadata of the haptic signal, and executes a first operation based on the haptic signal and the metadata of the haptic signal. Since the metadata of the haptic signal includes at least one of actuator information associated with the haptic signal, avatar information associated with the haptic signal, a perception modality associated with the haptic signal, and an amount of attenuation in signal strength of the haptic signal, controlling playback of the haptic signal based on the metadata of the haptic signal improves haptic feedback effects.

### BRIEF DESCRIPTION OF DRAWINGS

FIG. 1 is a flowchart of a haptic signal processing method according to an embodiment of the present application;
FIG. 2 is a structural diagram of a haptic signal processing apparatus according to an embodiment of the present application;
FIG. 3 is a structural diagram of an electronic device according to an embodiment of the present application;
FIG. 4 is a structural diagram of an electronic device according to another embodiment of the present application.

### DESCRIPTION OF EMBODIMENTS

The technical solutions in the embodiments of the present application will be clearly described below in conjunction with the drawings in the embodiments of the present application. Obviously, the described embodiments are part of the embodiments of the present application, not all of them. Based on the embodiments in the present application, all other embodiments obtained by those of ordinary skill in the art fall within the protection scope of the present application.

Terms such as "first" and "second" in the present application are used to distinguish similar objects and are not used to describe a specific order or sequence. It should be understood that terms used in this way can be interchanged where appropriate, so that the embodiments of the present application can be implemented in an order other than those illustrated or described herein, and objects distinguished by "first" and "second" are generally of one type and do not limit the number of objects, for example, there can be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after.

The term "indication" in the present application can be a direct indication (or explicit indication) or an indirect indication (or implicit indication). The direct indication can be understood as the sender explicitly informing the receiver of specific information, operations to be performed, or request results in the sent indication; the indirect indication can be understood as the receiver determining corresponding information according to the indication sent by the sender, or performing judgment and determining operations to be performed or request results according to the judgment result.

For ease of understanding, some contents involved in the embodiments of the present application are described below.

### 1. Graphics Language Transmission Format (Graphics Language Transmission Format, glTF) , a scene description format

glTF is a basic language for describing three-dimensional (Three-dimensional, 3D) scenes and models. glTF builds a program framework based on nodes (node). A modeling scene of glTF can be represented by a root node (root node), while objects in the modeling scene can be described by multiple nodes/sub-nodes (sub-node).

### 2. Avatar (avatar) description

In the MPEG scene modeling standard, a preliminary description standard for avatars has been designed, avatar-related extensions have been made at the node level (node level), and an avatar structure can be established using paths (path) and nodes.

### 3. Interactivity (interactivity) description

In the moving picture expert group (Moving Picture Expert Group, MPEG) scene modeling standard, a preliminary description standard for interactivity has been designed. For haptic scenes, it is mainly used to describe interactions between an avatar and a haptic source (haptic source), where both the haptic source and the avatar can be modeled using elements (such as nodes (node) or primitives (primitive)). Based on this, haptic signals are triggered and generated.

Interactivity is defined based on a behavior object (behavior object), where the behavior object includes a trigger condition (that is, trigger object (trigger object)) of the behavior object and an action object (action object) of the behavior object. The trigger object includes a collision condition (that is, collision trigger), a proximity condition (that is, proximity trigger), and the like. The action object includes a haptic feedback action object (for example, set haptic), and the like.

For the collision condition, a node array (node array) or primitive array (primitive array) is defined in the collision condition. If any node/primitive in the node array (node array)/primitive array (primitive array) collides, the collision condition is satisfied. For the proximity condition, a distance range and a node array/primitive array are defined in the proximity condition, and if the node/primitive is within the distance range, the proximity condition is satisfied. For the haptic feedback action, several parameters for haptic signal generation and playback are defined in the haptic feedback action. By way of example, the semantics (semantics) of the above trigger objects may be as shown in Table 1, the semantics of the action objects may be as shown in Table 2, and the semantics of the haptic action node object (HapticActionNode object) may be as shown in Table 3.

**Table 1 Semantics of trigger objects**

| Name (Name) | Type (Type) | Usage (Usage) | Default (Default) | Description (Description) |
|---|---|---|---|---|
| Collision trigger (collision trigger) | | | | |
| | | | | Indices of the nodes in the node array to be considered for collision determination. |
| Nodes (nodes) | Array (array) | M | | Any detection of collision shall activate the trigger (Indices of the nodes in the node array to be considered for collision determination. |
| | | | | Any detection of collision shall activate the trigger) |
| Primitives (primitives) | Array | O | [] | List of primitives used to activate the proximity or collision trigger (List of primitives used to activate the proximity or collision trigger) |

| Proximity trigger (proximity trigger) | | | | |
|---|---|---|---|---|
| Reference node | Number (number) | M | Default camera (Default Camera) | Indices of nodes in the node array that are used for the proximity evaluation (Index in the node array, of the node to consider for the proximity evaluation) |
| Distance lower limit (distanceLowerLimit ) | Number | M | 0 | Threshold min in meters for the node proximity calculation (Threshold min in meters for the node proximity calculation) |
| Distance upper limit (distanceUpperLimit) | Number | O | | Threshold max in meters for the node proximity calculation (Threshold max in meters for the node proximity calculation) |
| Nodes (nodes) | Array | M | [] | Indices of the nodes in the node array to be considered. All the nodes shall have a distance from the user camera above the distanceLowerLimit and below the distanceUpperLimit to activate the trigger (Indices of the nodes in the node array to be considered. All the nodes shall have a distance from the user camera above the distanceLowerLimit and below the distanceUpperLimit to activate the trigger) |
| Primitives | Array | O | [] | List of primitives used to activate the proximity or collision trigger (List of primitives used to activate the proximity or collision trigger) |

**Table 2 Semantics of action objects**

| Name | Type | Usage | Default | Description |
|---|---|---|---|---|
| Haptic action nodes (hapticActionNodes) | Array | M | N/A | List of haptic action nodes (List of haptic action nodes) |

**Table 3 Semantics of haptic action node object**

| Property (Property) | Type | Required (Required) | Default | Description |
|---|---|---|---|---|
| Node (node) | Integer (integer) | M | N/A | ID of the node in the glTF node array (Id of the node in the glTF node array) |
| Action location (actionLocation ) | Integer | O | 0xFFFFFFFF | Body part mask specifying where on the body the signal can be rendered (Body part mask specifying where on the body the signal can be rendered) |
| Washout (washout) | Boolean (boolean) | O | False | Specifies whether the action should trigger a washout (reset to the origin) of the associated devices (Specifies whether the action should trigger a washout (reset to the origin) of the associated devices) |
| Use collider (useCollider) | Boolean | O | False | Used with a Collision trigger. |
| | | | | If True, the rendering engine shall use collision information to estimate the desired location of the haptic feedback on the body. If false, the signal shall be rendered based on the information specified in the Haptic file (Used with a Collision trigger. |
| | | | | If True, the rendering engine shall use collision information to estimate the desired location of the haptic feedback on the body. If false, the signal shall be rendered based on the information specified in the Haptic file) |
| Material haptic modality (materialHaptic Modality) | Array | O | N/A | List of haptic material modalities that shall be rendered (List of haptic material modalities that shall be rendered) |
| Haptic action medias (hapticAction Medias) | Array | M | N/A | List of Haptic Action Media (List of Haptic Action Media) |

The haptic signal processing method provided in the embodiments of the present application will be described in detail below through some embodiments and application scenarios thereof in conjunction with the drawings.

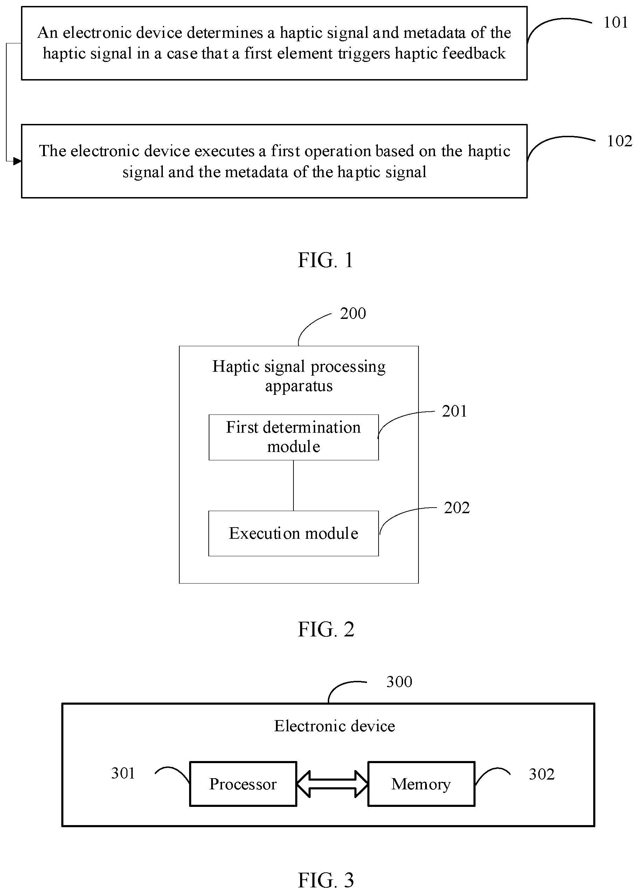

Referring to FIG. 1. FIG. 1 is a flowchart of a haptic signal processing method according to an embodiment of the present application, and the method may be executed by an electronic device, where the electronic device may be an XR device, a cloud device, a terminal device, a rendering device, a rendering engine, a server, a computer, or the like.

As shown in FIG. 1, the haptic signal processing method provided in this embodiment of the present application includes the following steps:
step 101: An electronic device determines a haptic signal and metadata of the haptic signal in a case that a first element triggers haptic feedback; and
step 102: The electronic device executes a first operation based on the haptic signal and the metadata of the haptic signal; where
the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

The first element may include at least one of an element of an avatar (avatar) or a user (user) and an element of a haptic source, where the element may include at least one of a node (node) and a primitive (primitive).

The first element triggers haptic feedback. For example, the first element satisfies a proximity (proximity) condition (that is, the first element triggers a proximity trigger (proximity trigger)), or the first element satisfies a collision (that is, collision) condition (that is, the first element triggers a collision trigger (collision trigger)).

The actuator (actuator) information may include, but is not limited to, actuator position information, an actuator identifier, or the like. The avatar information may include, but is not limited to, an avatar identifier (avatar ID). The perception modality (perception modality) may include, but is not limited to, at least one of temperature and vibration. The amount of attenuation is used to characterize the amount of attenuation in signal strength of the haptic signal with distance.

For the above step 101, by way of example, in a case that the first element satisfies the proximity condition or the collision condition, the electronic device may generate a haptic signal and metadata of the haptic signal.

For the above step 102, by way of example, in a case that the electronic device is an XR device, the electronic device may control the playback of the haptic signal based on the metadata of the haptic signal; in a case that the electronic device is a device other than an XR device (for example, a server or a computer), the electronic device may send the haptic signal and the metadata of the haptic signal to an XR device, and then the XR device controls the playback of the haptic signal based on the metadata of the haptic signal.

In the haptic signal processing method provided in the embodiment of the present application, in a case that a first element has triggered haptic feedback, the electronic device determines a haptic signal and metadata of the haptic signal, and executes a first operation based on the haptic signal and the metadata of the haptic signal. Since the metadata of the haptic signal includes at least one of actuator information associated with the haptic signal, avatar information associated with the haptic signal, a perception modality associated with the haptic signal, and an amount of attenuation in signal strength of the haptic signal, controlling playback of the haptic signal based on the metadata of the haptic signal improves haptic feedback effects.

Optionally, the actuator information associated with the haptic signal includes actuator information associated with a target element; where
the target element includes the first element or a second element, the second element is an element associated with a first action object, the first action object is an action object corresponding to a trigger condition associated with the first element, and the second element includes at least one of a node and a primitive.

In this embodiment, the action object (action object) may include, but is not limited to, a haptic action node (hapticActionNode) array, and each haptic action node in the haptic action node array may include, but is not limited to, a node identifier, an action location (actionLocation), a use collider (useCollider) indication, a material haptic modality (materialHapticModality) array, and a haptic action medias (hapticActionMedias) list. By way of example, the action object may refer to the foregoing related description, which is not repeated herein.

The first action object is an action object corresponding to a trigger condition (that is, a first trigger condition) associated with the first element, where the first element may include at least one element in an element group (for example., a node array (node array)/primitive array (primitive array)) defined in the first trigger condition, and the first action object and the first trigger condition are located in the same behavior object (behavior object) (that is, a first behavior object), that is, the first behavior object includes the first action object and the first trigger condition. The second element may include at least one element in an element group defined in the first action object. The behavior object can refer to the foregoing related description, which is not repeated herein. The trigger condition may include at least one of a collision conditionand a proximity condition, and the collision condition and the proximity condition can refer to the foregoing related description, which is not repeated herein.

The actuator information associated with the haptic signal includes actuator information associated with the target element, that is, the actuator information associated with the target element is used as the actuator information associated with the haptic signal. For example, actuator position information associated with the target element is used as the actuator position information associated with the haptic signal, or an actuator identifier associated with the target element is used as the actuator identifier associated with the haptic signal, which facilitates accurately and quickly locating the actuator for playing the haptic signal.

Optionally, the actuator information associated with the target element includes one of the following: body part target, actuator target, and actuator resolution;
or
the actuator information associated with the target element includes a device identifier, and the device identifier is used to identify an actuator associated with the target element.

In one implementation, at least one of a body part target (that is, body_part_target), an actuator target (that is, actuator target), and an actuator resolution (that is, actuator resolution) is defined in an element (for example, a node or primitive of a user or avatar) for precisely locating position information of an actuator on a humanoid avatar (humanoid avatar).

By way of example, taking the element being a node as an example, a newly added property of the node may be as shown in Table 4, and semantics of a haptic actuator object may be as shown in Table 5.

**Table 4 Node properties**

| Property | Description |
|---|---|
| Haptic actuator (hapticActuactor) | Targeted actuator(s) associated with this node (Targeted actuator(s) associated with this node) |

**Table 5 Semantics of haptic actuator object**

| Property | Description |
|---|---|
| Id | Unique identifier of the device. The value must be greater or equal to 0 (Unique identifier of the device. The value must be greater or equal to 0) |
| NodeId (nodeId) | Which node it belongs to (Which node it belongs to) |
| Body_part_target | It can be defined by user for specific devices (It can be defined by user for specific devices) |
| Actuator target | It can be defined by user for specific devices (It can be defined by user for specific devices) |
| Actuator resolution | It can be defined by user for specific devices (It can be defined by user for specific devices) |

In another implementation, a device identifier (device ID) may be defined in an element (for example, a node or primitive of a user or avatar) for identifying an actuator ID associated with the element. By way of example, taking the element being a node as an example, a newly added property of the node may be as shown in Table 6.

**Table 6 Node properties**

| Property | Description |
|---|---|
| Device ID (Device ID) | ID of the targeted device associated with this node (Targeted device's ID associated with this node) |

Optionally, the avatar information associated with the haptic signal includes avatar information associated with a target element;
or
the avatar information associated with the haptic signal includes avatar information associated with a haptic scene corresponding to the target element;
   or
the avatar information associated with the haptic signal includes avatar information associated with an upper-level element of the target element; where
the target element includes the first element or a second element, the second element is an element associated with a first action object, the first action object is an action object corresponding to a trigger condition associated with the first element, and the second element includes at least one of a node and a primitive.

In an implementation, avatar information associated with the target element may be used as the avatar information associated with the haptic signal. For example, an avatar identifier (avatar ID) may be defined in an element (for example, a node or primitive of a user or avatar), and if haptic feedback is triggered, the avatar ID in the element associated with the haptic feedback is used as the avatar ID associated with the generated haptic signal, that is, the avatar ID in metadata (metadata) of the haptic signal is set to the avatar ID in the element associated with the haptic feedback.

In another implementation, avatar information associated with a haptic scene corresponding to the target element may be used as the avatar information associated with the haptic signal. By way of example, for one haptic scene corresponding to one avatar or one active avatar, the avatar ID of the avatar or the activated avatar may be used as the avatar ID associated with the haptic signal, that is, the avatar ID field in metadata (metadata) of the haptic signal is set to the avatar ID of the avatar or the activated avatar.

In yet another implementation, avatar information associated with an upper-level element of the target element may be used as the avatar information associated with the haptic signal, where the upper-level element may be a parent node of the node if the target element is a node, for example. By way of example, for one upper-level element corresponding to one avatar or one active avatar, the avatar ID of the avatar or the activated avatar may be used as the avatar ID associated with the haptic signal, that is, the avatar ID field in metadata (metadata) of the haptic signal is set to the avatar ID of the avatar or the active avatar.

Optionally, the target element is an element in an active status;
or
the avatar information associated with the haptic signal includes avatar information of an element in an active status associated with a haptic scene corresponding to the target element;
   or
the avatar information associated with the haptic signal includes avatar information of an element in an active status associated with an upper-level element of the target element.

By way of example, the element in an active status associated with the haptic scene or the element in an active status associated with the upper-level element may be used to represent an avatar, that is, the avatar information associated with the haptic signal is avatar information of the avatar in an active status.

By way of example, a status identifier may be defined in an element (for example, avatar node/primitive), where the status identifier is used to identify an active status or an inactive status, for characterizing whether the element is currently an execution target of a haptic signal, for example, as shown in Table 7. In generation of a haptic signal, the avatar ID field in metadata of the haptic signal may be set to the avatar ID of the active element.

**Table 7**

| Property | Description |
|---|---|
| Avatar ID (Avatar ID) | ID of the avatar (ID of the avatar) |
| Status action (Status_Action) | Active or inactive status. Indicates whether a node is applicable to executing a haptic feedback action, for example, playing a haptic signal or haptic media (Active/inactive status. Indicate whether the node is active to play haptic media) |

Optionally, in a case that the first element includes N elements in an active status, the number of the haptic signals is N, where N is a positive integer, the N haptic signals correspond one-to-one with the N elements in an active status, and the avatar information associated with each haptic signal is avatar information of the element in an active status corresponding to that haptic signal.

By way of example, in a case that multiple active avatars coexist, a haptic signal may be generated separately for each avatar, and the avatar ID field in metadata of each haptic signal is set to the avatar ID of the corresponding avatar.

Optionally, the element being in an active status includes at least one of the following:
the element is in a first active status, where the first active status is used to indicate that the element is applicable to a haptic scene;
the element is in a second active status, where the second active status is used to indicate that the element is applicable to triggering haptic feedback; and
the element is in a third active status, where the third active status is used to indicate that the element is applicable to executing a haptic feedback action.

By way of example, at least one of a first status identifier, a second status identifier, and a third status identifier may be defined in an element (for example, avatar node/primitive), where the first status identifier, the second status identifier, and the third status identifier may each include an active status or an inactive status, the first status identifier can be used to indicate whether the element is applicable to a haptic scene, the second status identifier can be used to indicate whether the element is applicable to triggering haptic feedback, and the third status identifier can be used to indicate whether the element is applicable to executing a haptic feedback action. For example, referring to Table 8, where Status (Status) in Table 8 can represent the first status identifier, Status (Status_Trigger) in Table 8 can represent the second status identifier, and Status_Action in Table 8 can represent the third status identifier.

**Table 8**

| Property | Description |
|---|---|
| Status (Status) | Active or inactive status. Indicates whether a node is applicable to a haptic scene (Active/inactive status. Indicate whether the node is applied or not in the scene) |
| Trigger status (Status_Trigger) | Active or inactive status. Indicates whether a node is applicable to triggering haptic feedback, for example, whether it is a node for triggering a specified behavior (Active/inactive status. Indicate whether the node is active as node for trigger a given behavior) |
| Action status (Status_Action) | Active or inactive status. Indicates whether a node is applicable to executing a haptic feedback action, for example, playing a haptic signal or haptic media (Active/inactive status. Indicate whether the node is active to play haptic media) |

Optionally, the status of the element is set through a second action object, where the second action object is used to activate or deactivate an element.

In this embodiment, the second action object may include functions, parameters, or the like related to activating or deactivating the element, so that the status of the element can be set through the second action object.

Optionally, the perception modality associated with the haptic signal includes a perception modality associated with a target element;
or
the perception modality associated with the haptic signal includes a perception modality associated with a haptic scene corresponding to the target element;
   or
the perception modality associated with the haptic signal includes a perception modality associated with an upper-level element of the target element; where
the target element includes the first element or a second element, the second element is an element associated with a first action object, the first action object is an action object corresponding to a trigger condition associated with the first element, and the second element includes at least one of a node and a primitive.

In one implementation, a perception modality associated with the target element may be used as the perception modality associated with the haptic signal. By way of example, a parameter perception modality (perception modality) is defined in an element, and if haptic feedback is triggered, the corresponding perception modality in the element involved in the Trigger/Action associated with the haptic feedback is used as the perception modality associated with the generated haptic signal, that is, the perception modality field in metadata of the haptic signal is set to the corresponding perception modality in the element involved in the Trigger/Action associated with the haptic feedback.

In another implementation, a perception modality associated with a haptic scene corresponding to the target element may be used as the perception modality associated with the haptic signal. By way of example, for one haptic scene corresponding to one perception modality, the perception modality corresponding to the haptic scene can be used as the perception modality associated with the haptic signal, that is, the perception modality field in metadata of the haptic signal is set to the perception modality corresponding to the haptic scene.

In yet another implementation, a perception modality associated with an upper-level element of the target element may be used as the perception modality associated with the haptic signal. By way of example, for one upper-level element corresponding to one perception modality, the perception modality corresponding to the upper-level element may be used as the perception modality associated with the haptic signal, that is, the perception modality field in metadata of the haptic signal is set to the perception modality corresponding to the upper-level element.

Optionally, the perception modality associated with the haptic signal includes a perception modality in an active status associated with the target element;
or
the perception modality associated with the haptic signal includes a perception modality in an active status associated with a haptic scene corresponding to the target element;
   or
the perception modality associated with the haptic signal includes a perception modality in an active status associated with an upper-level element of the target element.

By way of example, in a case that multiple perception modalities coexist, a status identifier of the perception modality may be introduced for characterizing whether one perception modality is in an active status. In the generation of a haptic signal, the perception modality field in metadata of the haptic signal may be set to the perception modality in the active status; or a modality list (modality list) may be used to indicate one or more perception modalities in an active status.

Optionally, in a case that there are M perception modalities in an active status among perception modalities associated with the target element, the number of haptic signals is M, where M is a positive integer, the M haptic signals correspond one-to-one with the M perception modalities in an active status, and the perception modality associated with each haptic signal is respectively the perception modality in an active status corresponding to that haptic signal.

By way of example, in a case that multiple perception modalities or multiple perception modalities in an active status coexist, a haptic signal may be generated separately for each perception modality or each perception modality in an active status, and the perception modality field in metadata of each haptic signal is set to the corresponding perception modality.

Optionally, the status of the perception modality is set through a third action object, where the third action object is used to activate or deactivate a perception modality.

In this embodiment, the third action object may include functions, parameters, or the like related to activating or deactivating the perception modality, so that the status of the perception modality can be set through the third action object.

By way of example, as shown in Table 9, the action object for activating or deactivating the perception modality may include a perception modality or a perception modality list for indicating perception modalities that can be applied to a virtual world, that is, perception modalities in an active status.

**Table 9**

| Perception modality action | Description |
|---|---|
| Perception modalities (Perception modalities) | The perception modality to be applied in the virtual world (The perception modality to be applied in the virtual world) |

Optionally, in a case that the first element has triggered haptic feedback, before the electronic device determines the haptic signal and the metadata of the haptic signal, the method further includes:
determining, by the electronic device, a status of a first behavior object, where the first behavior object includes a first trigger condition and a first action object, and the first trigger condition is a trigger condition associated with the first element; and
determining, by the electronic device, whether to apply the first behavior object based on the status of the first behavior object.

In this embodiment, the status of the first behavior object may include an active status or an inactive status, where in a case that the first behavior object is in the active status, it indicates that the first behavior object is valid, and in this case, the electronic device can apply or execute the first behavior object, that is, the electronic device can apply the trigger condition (that is, the first trigger condition) included in the first behavior object to detect whether haptic feedback is triggered, and can apply the action object (that is, the first action object) included in the first behavior object to execute a haptic feedback action; and in a case that the first behavior object is in the inactive status, it indicates that the first behavior object is invalid, and in this case, the electronic device may not apply or not execute the first behavior object, that is, the electronic device does not apply the trigger condition (that is, the first trigger condition) included in the first behavior object to detect whether haptic feedback is triggered, or does not apply the action object (that is, the first action object) included in the first behavior object to execute a haptic feedback action.

By way of example, an interactivity model may include invalid behavior (behavior) objects, for example, because deactivation of an avatar or perception modality makes the behavior object invalid. To avoid executing invalid commands, the electronic device may determine the status of each behavior object and apply only a behavior object in an active status.

Optionally, the status of the first behavior object is determined based on a status identifier associated with the first behavior object, where the status identifier is used to identify an active status or an inactive status;
or
the status of the first behavior object is determined based on at least one of the status of the first trigger condition and the status of the first action object.

In one implementation, the status of the first behavior object may be determined based on a status identifier associated with the first behavior object, for example, if the status identifier associated with the first behavior object identifies an inactive status, the first behavior object is determined to be in the inactive status, and if the status identifier associated with the first behavior object identifies an active status, the first behavior object is determined to be in an active status.

By way of example, a status identifier may be set in the behavior object, and for a deactivated behavior object, the behavior object does not need to be executed. For example, each behavior object includes a trigger condition, an action object, and a status identifier, that is, behavior {Trigger, Action, Status}, where Status can be used to identify an active status or an inactive status.

In another implementation, the status of the first behavior object may be determined based on at least one of the status of the first trigger condition and the status of the first action object. For example, in a case that both the first trigger condition and the first action object are in an active status, the first behavior object is determined to be in an active status, otherwise the first behavior object is determined to be in an inactive status.

Optionally, the status of the first trigger condition is determined based on a status identifier associated with the first trigger condition, or based on a status identifier that is associated with an element associated with the first trigger condition;
or
the status of the first action object is determined based on a status identifier of the first action object, or based on a status identifier that is associated with an element associated with the first action object;
where the status identifier is used to identify an active status or an inactive status.

The following description is provided by cases.

### (1) For the status of the first trigger condition

In an implementation, the status of the first trigger condition may be determined based on a status identifier associated with the first trigger condition. For example, if the status identifier associated with the first trigger condition identifies an inactive status, the first trigger condition is determined to be in the inactive status, and if the status identifier associated with the first trigger condition identifies an active status, the first trigger condition is determined to be in an active status. By way of example, a status identifier may be set in the trigger condition (that is, trigger) for identifying an active status or an inactive status of the trigger condition, and for an inactive trigger condition, the behavior object corresponding to the trigger condition does not need to be executed.

In another implementation, the status of the first trigger condition may be determined based on a status identifier that is associated with an element associated with the first trigger condition. By way of example, a status identifier may be set in the element for identifying an active status or an inactive status of the element, and then whether the trigger condition is active may be determined based on the active status or inactive status of the element in the trigger condition. For example, if there is at least one element in an active status in the element list corresponding to the trigger condition, the trigger condition is determined to be in an active status.

### (2) For the status of the first action object

In an implementation, the status of the first action object may be determined based on a status identifier associated with the first action object. For example, if the status identifier associated with the first action object identifies an inactive status, the first action object is determined to be in the inactive status, and if the status identifier associated with the first action object identifies an active status, the first action object is determined to be in an active status. By way of example, a status identifier may be set in the action object for identifying an active status or an inactive status of the action object, and for an inactive action object, the behavior object corresponding to the action object does not need to be executed.

In another implementation, the status of the first action object may be determined based on a status identifier that is associated with an element associated with the first action object. By way of example, a status identifier may be set in the element for identifying an active status or an inactive status of the element, and then whether the action object is active may be determined based on the active status or inactive status of the element in the action object. For example, if there is at least one element in an active status in the element list corresponding to the action object, the action object is determined to be in an active status.

In some optional embodiments, there are multiple active/inactive forms of for an element, for example, (a) whether the element is always in an active or inactive status, (b) whether the element is in an active/inactive status in a case that the element serves as a trigger condition (that is, trigger) element, and (c) whether the element is in an active/inactive status in a case that the element serves as an action element.

It should be noted that, for a scene in a virtual world where there are a humanoid avatar (humanoid avatar) and a car type avatar (car type avatar), when a person enters a car, the car type avatar is responsible for triggering and generating a haptic signal, and the humanoid avatar does not trigger generation of a haptic signal at that point, but the humanoid avatar is still in an effective state, for example, the position of the humanoid avatar can be used to determine when the person leaves the car, so it is necessary to introduce the above (b) and (c).

By way of example, as shown in Table 10, a status activation action (that is, an action object for activating or deactivating the status of an element) includes Set Status_Trigger (Set Status_Trigger) and Set Status_Action (Set Status_Action), where Set Status_Trigger is used to indicate whether an element serving as a trigger condition (that is, Trigger) element is active, and Set Status_Action is used to indicate whether an element serving as an action object element is active.

**Table 10**

| Status activation action (ACTION_StatusActivition) | Description |
|---|---|
| Set Status_Trigger (Set Status_Trigger) | Active/inactive status of node(s) [or primitive(s)]. Indicates whether the node is active or not as trigger (Active/inactive status of node(s) [or primitive(s)]. Indicate whether the node is active or not as trigger) |
| Set Status_Action (Set Status_Action) | Active/inactive status of node(s) [or primitive(s)]. Indicates whether the node is active or not as action (Active/inactive status of node(s) [or primitive(s)]. Indicate whether the node is active or not as action) |

Optionally, the status of the first behavior object is set through a fourth action object, where the fourth action object is used to activate or deactivate a behavior object;
or
the status of the first trigger condition is set through a fifth action object, where the fifth action object is used to activate or deactivate a trigger condition;
   or
the status of the first action object is set through a sixth action object, where the sixth action object is used to activate or deactivate an action object;
   or
the status of the element is set through a seventh action object, where the seventh action object is used to activate or deactivate an element.

In this embodiment, the fourth action object may include functions, parameters, or the like related to activating or deactivating the behavior object, so that the status of the behavior object can be set through the fourth action object.

The fifth action object may include functions, parameters, or the like related to activating or deactivating the trigger condition, so that the status of the first trigger condition can be set through the fifth action object.

The sixth action object may include functions, parameters, or the like related to activating or deactivating the action object, so that the status of the first action object can be set through the sixth action object.

The seventh action object may include functions, parameters, or the like related to activating or deactivating the element, so that the status of the element can be set through the seventh action object.

Optionally, the status of the first behavior object is determined based on the status of a perception modality corresponding to the first behavior object;
or
the status of the first behavior object is determined based on a perception modality corresponding to the first trigger condition and a perception modality corresponding to the first action object, or the status of the first behavior object is determined based on a perception modality in an active status corresponding to the first trigger condition and a perception modality in an active status corresponding to the first action object.

In an implementation, the status of the first behavior object may be determined based on the status of a perception modality corresponding to the first behavior object. For example, if there is at least one perception modality in an active status among perception modalities corresponding to the first behavior object, the first behavior object is in an active status, otherwise the first behavior object is in an inactive status; or if all perception modalities corresponding to the first behavior object are in an active status, the first behavior object is in an active status, otherwise the first behavior object is in an inactive status.

In another implementation, the status of the first behavior object is determined based on a perception modality corresponding to the first trigger condition and a perception modality corresponding to the first action object. For example, if the perception modality corresponding to the first trigger condition is the same as the perception modality corresponding to the first action object, the first behavior object is determined to be in an active status, and if the perception modality corresponding to the first trigger condition is different from the perception modality corresponding to the first action object, the first behavior object is determined to be in an inactive status; or the status of the first behavior object is determined based on a perception modality in an active status corresponding to the first trigger condition and a perception modality in an active status corresponding to the first action object. For example, if the perception modality in an active status corresponding to the first trigger condition is the same as the perception modality in an active status corresponding to the first action object, the first behavior object is determined to be in an active status, and if the perception modality in an active status corresponding to the first trigger condition is different from the perception modality in an active status corresponding to the first action object, the first behavior object is determined to be in an inactive status.

Optionally, the perception modality corresponding to the first behavior object is a perception modality corresponding to a haptic scene associated with the first behavior object.

By way of example, a parameter perception modality can be introduced at the haptic scene level, and if a certain perception modality is deactivated in the haptic scene, elements or behavior objects corresponding to the perception modality will be deactivated.

Optionally, the status of the perception modality corresponding to the first behavior object is determined based on a status identifier associated with the perception modality corresponding to the first behavior object.

In this embodiment, a status identifier can be set at the perception modality level for identifying an active status or an inactive status of the perception modality. By way of example, at least one of a perception modality and a status identifier of a perception modality can be introduced at the behavior object level, and if the behavior object corresponds only to an inactive perception modality, the behavior object does not need to be executed. If the behavior object corresponds to multiple perception modalities, each perception modality may correspond to a status identifier.

Optionally, in a case that all perception modalities corresponding to the first behavior object are in an inactive status, the first behavior object is in an inactive status.

Optionally, in a case that the perception modality corresponding to the first trigger condition is the same as the perception modality corresponding to the first action object, the first behavior object is in an active status, and in a case that the perception modality corresponding to the first trigger condition is different from the perception modality corresponding to the first action object, the first behavior object is in an active status, the first behavior object is in an inactive status;
or
in a case that the perception modality in an active status corresponding to the first trigger condition is the same as the perception modality in an active status corresponding to the first action object, the first behavior object is in an active status, and in a case that the perception modality in an active status corresponding to the first trigger condition is different from the perception modality in an active status corresponding to the first action object, the first behavior object is in an inactive status.

Optionally, the status of the perception modality corresponding to the first trigger condition is determined based on a status identifier of the perception modality corresponding to the first trigger condition;
or
the status of the perception modality corresponding to the first trigger condition is determined based on a status identifier of a perception modality that corresponds to an element corresponding to the first trigger condition.

In an implementation, at least one of a perception modality and a status identifier of a perception modality is set at the trigger condition (that is, trigger) level.

In another implementation, at least one of a perception modality and a status identifier of the perception modality is set at the element level, and a perception modality activated by the trigger condition is determined based on at least one of the perception modality and the status identifier of the perception modality of an element in the trigger condition.

Optionally, the status of the perception modality corresponding to the first action object is determined based on a status identifier of the perception modality corresponding to the first action object;
or
the status of the perception modality corresponding to the first action object is determined based on a status identifier of a perception modality that corresponds to an element corresponding to the first action object.

In an implementation, at least one of a perception modality and a status identifier of a perception modality is set at the action object level.

In another implementation, at least one of a perception modality and a status identifier of a perception modality is set at the element level, and an activated perception modality activated by an action object is determined based on at least one of the perception modality and the status identifier of the perception modality of an element in the action object.

In some optional embodiments, at least one perception modality in an active status can be directly indicated through a perception modality or a perception modality list (perception modality list).

Optionally, a third element is associated with at least one of the following: attenuation related parameters of the haptic signal and propagation distance related parameters of the haptic signal; where
the third element includes at least one element of a haptic source or at least one element of a haptic scene.

By way of example, the attenuation (attenuation) related parameters may include an attenuation identifier, related parameters for calculating an amount of attenuation (attenuation formula), or the like, for example, as shown in Table 11.

**Table 11 Haptic source node attenuation properties**

| Property | Description |
|---|---|
| Attenuation (Attenuation) | Indicates the function used to calculate the attenuation of the haptic signal based on the distance to the source (Indicates the function used to calculate the attenuation of the haptic signal based on the distance to the source) |

The propagation distance related parameters may include a maximum distance for propagation of the haptic signal or may be used to indicate a range of propagation of the haptic signal, or the like.

It can be understood that the perceived intensity of a haptic signal is related to the distance from a haptic signal source. For example, in an explosion scenario, a user at a farther distance from the explosion source perceives weaker vibration (perception modality = vibrotactile (vibrotactile)) and lower heat (perception modality = temperature (temperature)); and at a greater distance, the user may not even feel the vibration or heat caused by the explosion. In this embodiment, associating the third element with at least one of attenuation related parameters of the haptic signal and propagation distance related parameters of the haptic signal improves haptic feedback effects.

Optionally, the attenuation related parameters include an attenuation identifier, where the attenuation identifier is used to indicate that the signal strength of the haptic signal attenuates with distance.

Optionally, there is an association relationship between the attenuation related parameters and a perception modality.

For example, attenuation related parameters are set separately for each perception modality (that is, per perception modality).

Optionally, an amount of attenuation in signal strength of the haptic signal is determined based on an attenuation model or an attenuation formula, where the attenuation model or attenuation formula is agreed upon by a protocol.

By way of example, the amount of attenuation in signal strength of the haptic signal can be calculated according to the attenuation model or attenuation formula and the attenuation related parameters.

In some optional embodiments, the amount of attenuation in signal strength of the haptic signal can be embodied through a channel gain (channel gain) in metadata of the haptic signal, that is, the channel gain field in metadata of the haptic signal is set to the amount of attenuation.

Optionally, the propagation distance related parameters include an upper limit value of propagation distance of the haptic signal, where the upper limit value of propagation distance is used to indicate a maximum propagation distance of the haptic signal.

Optionally, a trigger condition associated with the first element is a proximity condition, a second element includes a proximity use identifier, the second element includes at least one element in a first action object, and the first action object is an action object corresponding to the trigger condition associated with the first element; where
the proximity use identifier is used to indicate whether the electronic device triggers haptic feedback based on an element located within a distance range defined by the proximity condition.

By way of example, an element associated with the action object may carry a proximity use identifier (useProximity), and if the value of useProximity is true (true), an actuator (actuator) corresponding to an element within the distance defined by the proximity condition corresponding to the action object can play the haptic signal, for example, as shown in Table 12.

**Table 12 Haptic action node properties**

| Property | Description |
|---|---|
| Use proximity (useProximity) | Used with a Proximity trigger. If True, the rendering engine shall use proximity type of detectors to estimate the desired location of the haptic feedback on the body and the intensity of the haptic feedback (Used with a Proximity trigger. If True, the rendering engine shall use proximity type of detectors to estimate the desired location of the haptic feedback on the body and the intensity of the haptic feedback) |

In some optional embodiments, actuator information (for example, body part mask (body part mask), body part target, actuator target) in the metadata of the haptic signal can be set to actuator information corresponding to an element satisfying the proximity condition.

Optionally, a trigger condition associated with the first element is a collision condition, an element list corresponding to the collision condition includes at least two elements, each of the at least two elements is associated with a type identifier or a first identifier, and the first identifier associated with each element is respectively an identifier of an upper-level element of that element; where
in a case that elements associated with different type identifiers or first identifiers among the at least two elements collide, the collision condition is determined to be satisfied.

The type identifier associated with the element can be used to identify a type of the element, for example, the type of the element may include a haptic source element and a user element (that is, avatar element), then the type identifier associated with the element may include a haptic source element identifier and a user element identifier, so that in a case that elements of different types collide, the collision condition is determined to be satisfied. For example, in a case that a haptic source element and a user element collide, the collision condition is determined to be satisfied, while in a case that elements of the same type collide, the collision condition can be determined to be not satisfied.

The first identifier associated with the element is an identifier of an upper-level element of the element. For example, for a node, the identifier of its associated upper-level element may be an identifier of its parent node (parent node), so that in a case that elements having different upper-level elements collide, the collision condition is determined to be satisfied. For example, in a case that a node whose parent node is parent node1 collides with a node whose parent node is parent node2, the collision condition is determined to be satisfied, while in a case that elements under a same upper-level element collide, the collision condition can be determined to be not satisfied. For example, as shown in Tables 13 and 14.

**Table 13 Parent node properties of a node**

| Property | Description |
|---|---|
| Parent node (parentNode) | The index of parent-node this node belongs to (The index of parent-node this node belongs to) |

**Table 14 Semantics of trigger**

| Name | Description |
|---|---|
| Collision trigger (TRIGGER_COLLISION) | |
| Nodes (Nodes) | Indices of the nodes in the node array to be considered for collision determination. Any detection of collision between nodes with different parent-node indices shall activate the trigger (Indices of the nodes in the node array to be considered for collision determination. Any detection of collision between nodes with different parent-node indices shall activate the trigger) |
| Primitives (primitives) | List of primitives used to activate the proximity or collision trigger (List of primitives used to activate the proximity or collision trigger) |

Optionally, a trigger condition associated with the first element is a collision condition, the collision condition corresponds to at least two element groups, each element group includes at least one element, where in a case that elements between different element groups among the at least two element groups collide, the collision condition is determined to be satisfied.

By way of example, the at least two element groups may include a haptic source element group and a user element group (that is, avatar element group), where the haptic source element group includes at least one haptic source element, and the user element group includes at least one user element, so that in a case that elements between different element groups collide, the collision condition is determined to be satisfied. For example, in a case that an element of the haptic source element group collides with an element of the user element group, the collision condition is determined to be satisfied; otherwise, the collision condition can be determined to be not satisfied.

Optionally, a trigger condition associated with the first element is a collision condition, the collision condition corresponds to at least two elements, and in a case that lower-level elements of different elements among the at least two elements collide, the collision condition is determined to be satisfied.

By way of example, in a case that the at least two elements are parent nodes, lower-level elements of the at least two elements may be nodes or sub-nodes; and in a case that the at least two elements are nodes, lower-level elements of the at least two elements may be sub-nodes.

It should be noted that, in an interactivity model, collision is defined at the node level. A node list (node list) is carried in the collision trigger, and if nodes in the node list collide, the collision condition is considered satisfied. However, for high-precision collision determination, a user node or avatar node is virtualized into countless tiny basic geometric models, and a haptic source node is virtualized into countless tiny basic geometric models. Then, from a program implementation perspective, collision detection between tiny basic geometric models requires repeatedly defining countless trigger objects, each trigger object including a basic geometric model of a user node (user node) and a basic geometric model of a haptic source node (haptic source node), resulting in relatively high complexity of this implementation. Based on this, in this embodiment, an element list corresponding to the collision condition is set to include at least two elements, each of the at least two elements being associated with a type identifier or a first identifier, such that the collision condition is determined to be satisfied in a case that elements associated with different type identifiers or first identifiers among the at least two elements collide; or the collision condition is set to correspond to at least two element groups, such that the collision condition is determined to be satisfied in a case that elements between different element groups among the at least two element groups collide; or the collision condition is set to correspond to at least two elements, such that the collision condition is determined to be satisfied in a case that lower-level elements of different elements among the at least two elements collide. In this way, implementation complexity of collision condition determination can be simplified.

Optionally, the executing, by the electronic device, a first operation based on the haptic signal and the metadata of the haptic signal includes:
controlling, by the electronic device, playback of the haptic signal based on the metadata of the haptic signal.

By way of example, the electronic device may be an XR device. The electronic device controls playback of the haptic signal based on the metadata of the haptic signal. For example, in a case that the metadata of the haptic signal includes actuator information associated with the haptic signal, the electronic device can determine an actuator for playing the haptic signal based on the actuator information associated with the haptic signal, and then can play the haptic signal based on the determined actuator; or in a case that the metadata of the haptic signal includes an amount of attenuation in signal strength of the haptic signal, signal strength of the played haptic signal can be controlled based on the amount of attenuation in signal strength of the haptic signal, which improves haptic feedback effects.

It should be noted that the inventive concept provided in the embodiments of the present application can be applied to an electronic device determining a haptic signal, and can also be applied to an electronic device determining other signals such as a visual signal and an audio signal.

It should be noted that, the haptic signal processing method provided in the embodiments of the present application may be executed by a haptic signal processing apparatus or a control module in the haptic signal processing apparatus for executing the haptic signal processing method. In the embodiments of the present application, the haptic signal processing apparatus provided in the embodiments of the present application is described by taking the haptic signal processing apparatus executing the haptic signal processing method as an example.

Referring to FIG. 2, FIG. 2 is a structural diagram of a haptic signal processing apparatus provided by an embodiment of the present application. As shown in FIG. 2, the haptic signal processing apparatus 200 includes:
a first determination module 201, configured to determine a haptic signal and metadata of the haptic signal in a case that a first element triggers haptic feedback; and
an execution module 202, configured to execute a first operation based on the haptic signal and the metadata of the haptic signal; where
the first element includes at least one of a node and a primitive, and the metadata of the haptic signal includes at least one of the following: actuator information associated with the haptic signal, avatar information associated with the haptic signal, a perception modality associated with the haptic signal, an amount of attenuation in signal strength of the haptic signal.

Optionally, the actuator information associated with the haptic signal includes actuator information associated with a target element; where
the target element includes the first element or a second element, the second element is an element associated with a first action object, the first action object is an action object corresponding to a trigger condition associated with the first element, and the second element includes at least one of a node and a primitive.

Optionally, the actuator information associated with the target element includes one of the following: body part target, actuator target, and actuator resolution;
or
the actuator information associated with the target element includes a device identifier, where the device identifier is used to identify an actuator associated with the target element.

Optionally, the avatar information associated with the haptic signal includes avatar information associated with a target element;
or
the avatar information associated with the haptic signal includes avatar information associated with a haptic scene corresponding to the target element;
   or
the avatar information associated with the haptic signal includes avatar information associated with an upper-level element of the target element; where
the target element includes the first element or a second element, the second element is an element associated with a first action object, the first action object is an action object corresponding to a trigger condition associated with the first element, and the second element includes at least one of a node and a primitive.

Optionally, the target element is an element in an active status;
or
the avatar information associated with the haptic signal includes avatar information of an element in an active status associated with a haptic scene corresponding to the target element;
   or
the avatar information associated with the haptic signal includes avatar information of an element in an active status associated with an upper-level element of the target element.

Optionally, in a case that the first element includes N elements in an active status, the number of the haptic signals is N, where N is a positive integer, the N haptic signals correspond one-to-one with the N elements in an active status, and the avatar information associated with each haptic signal is avatar information of the element in an active status corresponding to that haptic signal.

Optionally, the element being in an active status includes at least one of the following:
the element is in a first active status, where the first active status is used to indicate that the element is applicable to a haptic scene;
the element is in a second active status, where the second active status is used to indicate that the element is applicable to triggering haptic feedback; and
the element is in a third active status, where the third active status is used to indicate that the element is applicable to executing a haptic feedback action.

Optionally, the status of the element is set through a second action object, where the second action object is used to activate or deactivate an element.

Optionally, the perception modality associated with the haptic signal includes a perception modality associated with a target element;
or
the perception modality associated with the haptic signal includes a perception modality associated with a haptic scene corresponding to the target element;
   or
the perception modality associated with the haptic signal includes a perception modality associated with an upper-level element of the target element; where
the target element includes the first element or a second element, the second element is an element associated with a first action object, the first action object is an action object corresponding to a trigger condition associated with the first element, and the second element includes at least one of a node and a primitive.

Optionally, the perception modality associated with the haptic signal includes a perception modality in an active status associated with the target element;
or
the perception modality associated with the haptic signal includes a perception modality in an active status associated with a haptic scene corresponding to the target element;
   or
the perception modality associated with the haptic signal includes a perception modality in an active status associated with an upper-level element of the target element.

Optionally, in a case that there are M perception modalities in an active status among perception modalities associated with the target element, the number of the haptic signals is M, where M is a positive integer, the M haptic signals correspond one-to-one with the M perception modalities in an active status, and the perception modality associated with each haptic signal is respectively the perception modality in an active status corresponding to that haptic signal.

Optionally, the status of the perception modality is set through a third action object, where the third action object is used to activate or deactivate a perception modality.

Optionally, the apparatus further includes:
a second determination module, configured to, in a case that the first element has triggered haptic feedback, determine a status of a first behavior object before determining the haptic signal and the metadata of the haptic signal, where the first behavior object includes a first trigger condition and a first action object, and the first trigger condition is a trigger condition associated with the first element; and
a third determination module, configured to determine whether to apply the first behavior object based on the status of the first behavior object.

Optionally, the status of the first behavior object is determined based on a status identifier associated with the first behavior object, where the status identifier is used to identify an active status or an inactive status;
or
the status of the first behavior object is determined based on at least one of the status of the first trigger condition and the status of the first action object.

Optionally, the status of the first trigger condition is determined based on a status identifier associated with the first trigger condition, or based on a status identifier that is associated with an element associated with the first trigger condition;
or
the status of the first action object is determined based on a status identifier of the first action object, or based on a status identifier that is associated with an element associated with the first action object;
where the status identifier is used to identify an active status or an inactive status.

Optionally, the status of the first behavior object is set through a fourth action object, where the fourth action object is used to activate or deactivate a behavior object;
or
the status of the first trigger condition is set through a fifth action object, where the fifth action object is used to activate or deactivate a trigger condition;
   or
the status of the first action object is set through a sixth action object, where the sixth action object is used to activate or deactivate an action object;
   or
the status of the element is set through a seventh action object, where the seventh action object is used to activate or deactivate an element.

Optionally, the status of the first behavior object is determined based on a status of a perception modality corresponding to the first behavior object;
or
the status of the first behavior object is determined based on a perception modality corresponding to the first trigger condition and a perception modality corresponding to the first action object, or the status of the first behavior object is determined based on a perception modality in an active status corresponding to the first trigger condition and a perception modality in an active status corresponding to the first action object.

Optionally, the perception modality corresponding to the first behavior object is a perception modality corresponding to a haptic scene associated with the first behavior object.

Optionally, the status of the perception modality corresponding to the first behavior object is determined based on a status identifier associated with the perception modality corresponding to the first behavior object.

Optionally, in a case that all perception modalities corresponding to the first behavior object are in an inactive status, the first behavior object is in an inactive status.

Optionally, in a case that the perception modality corresponding to the first trigger condition is the same as the perception modality corresponding to the first action object, the first behavior object is in an active status, and in a case that the perception modality corresponding to the first trigger condition is different from the perception modality corresponding to the first action object, the first behavior object is in an active status, the first behavior object is in an inactive status;
or
in a case that the perception modality in an active status corresponding to the first trigger condition is the same as the perception modality in an active status corresponding to the first action object, the first behavior object is in an active status, and in a case that the perception modality in an active status corresponding to the first trigger condition is different from the perception modality in an active status corresponding to the first action object, the first behavior object is in an inactive status.

Optionally, the status of the perception modality corresponding to the first trigger condition is determined based on a status identifier of the perception modality corresponding to the first trigger condition;
or
the status of the perception modality corresponding to the first trigger condition is determined based on a status identifier of a perception modality that corresponds to an element corresponding to the first trigger condition.

Optionally, a third element is associated with at least one of the following: attenuation related parameters of the haptic signal and propagation distance related parameters of the haptic signal; where
the third element includes at least one element of a haptic source or at least one element of a haptic scene.

Optionally, the attenuation related parameters include an attenuation identifier, where the attenuation identifier is used to indicate that the signal strength of the haptic signal attenuates with distance.

Optionally, there is an association relationship between the attenuation related parameters and a perception modality.

Optionally, an amount of attenuation in signal strength of the haptic signal is determined based on an attenuation model or an attenuation formula, where the attenuation model or attenuation formula is agreed upon by a protocol.

Optionally, the propagation distance related parameters include an upper limit value of propagation distance of the haptic signal, where the upper limit value of propagation distance is used to indicate a maximum propagation distance of the haptic signal.

Optionally, a trigger condition associated with the first element is a proximity condition, a second element includes a proximity use identifier, the second element includes at least one element in a first action object, and the first action object is an action object corresponding to the trigger condition associated with the first element; where
the proximity use identifier is used to indicate whether the electronic device triggers haptic feedback based on an element located within a distance range defined by the proximity condition.

Optionally, a trigger condition associated with the first element is a collision condition, an element list corresponding to the collision condition includes at least two elements, each of the at least two elements is associated with a type identifier or a first identifier, and the first identifier associated with each element is respectively an identifier of an upper-level element of each element; where
in a case that elements associated with different type identifiers or first identifiers among the at least two elements collide, the collision condition is determined to be satisfied.

Optionally, a trigger condition associated with the first element is a collision condition, the collision condition corresponds to at least two element groups, each element group includes at least one element, where in a case that elements between different element groups among the at least two element groups collide, the collision condition is determined to be satisfied.

Optionally, a trigger condition associated with the first element is a collision condition, the collision condition corresponds to at least two elements, and in a case that lower-level elements of different elements among the at least two elements collide, the collision condition is determined to be satisfied.

Optionally, the execution module is specifically configured to:
control playback of the haptic signal based on the metadata of the haptic signal.

The haptic signal processing apparatus in the embodiments of the present application may be an electronic device, for example, an electronic device with an operating system, or may be a component in an electronic device, such as an integrated circuit or a chip. The electronic device may be an XR device, a terminal, a server, a computer, or the like.

The haptic signal processing apparatus provided in the embodiments of the present application can implement the processes implemented in the method embodiment of FIG. 1, with the same technical effects achieved. To avoid repetition, details are not repeated herein.

Optionally, as shown in FIG. 3, an embodiment of the present application further provides an electronic device 300, including a processor 301 and a memory 302. A program or an instruction capable of running on the processor 301 is stored on the memory 302. When the program or the instruction is executed by the processor 301, the steps of the above embodiment of the haptic signal processing method are implemented, with the same technical effects achieved. To avoid repetition, details are not repeated herein.

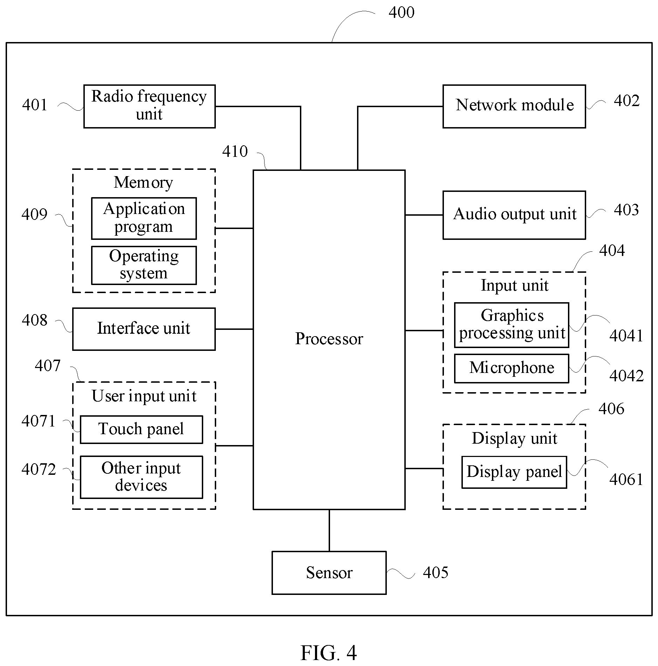

The embodiment of the present application further provides an electronic device, including a processor and a communication interface. The processor is configured to determine a haptic signal and metadata of the haptic signal in a case that a first element triggers haptic feedback, and execute a first operation based on the haptic signal and the metadata of the haptic signal; where the first element includes at least one of a node and a primitive, and the metadata of the haptic signal includes at least one of the following: actuator information associated with the haptic signal, avatar information associated with the haptic signal, a perception modality associated with the haptic signal, and an amount of attenuation in signal strength of the haptic signal. This electronic device embodiment corresponds to the above method embodiment on the electronic device side, and all implementation processes and implementations of the above method embodiment are applicable to this electronic device embodiment, with the same technical effects achieved. Specifically, FIG. 4 is a schematic diagram of a hardware structure of an electronic device implementing an embodiment of the present application.

The electronic device 400 includes, but is not limited to, at least part of components such as a radio frequency unit 401, a network module 402, an audio output unit 403, an input unit 404, a sensor 405, a display unit 406, a user input unit 407, an interface unit 408, a memory 409, and a processor 410.

Those skilled in the art can understand that the electronic device 400 may further include a power supply (such as a battery) for supplying power to various components, and the power supply may be logically connected to the processor 410 through a power management system, so that functions such as charging management, discharging management, and power consumption management are implemented via the power management system. The electronic device structure shown in FIG. 4 does not constitute a limitation on the electronic device, and the electronic device may include more or fewer components than shown, or combine some components, or arrange different components, which is not repeated herein.

It should be understood that, in the embodiment of the present application, the input unit 404 may include a graphics processing unit (Graphics Processing Unit, GPU) 4041 and a microphone 4042, and the graphics processing unit 4041 processes image data of a static picture or a video obtained by an image capture device (such as a camera) in a video capture mode or an image capture mode. The display unit 406 may include a display panel 4061, and the display panel 4061 may be configured in the form of a liquid crystal display, an organic light emitting diode, or the like. The user input unit 407 includes at least one of a touch panel 4071 and other input devices 4072. The touch panel 4071 is also referred to as a touch screen. The touch panel 4071 may include two parts: a touch detection device and a touch controller. The other input devices 4072 may include, but are not limited to, a physical keyboard, function keys (for example, volume control keys or switch keys), a trackball, a mouse, and a joystick, which are not repeated herein.

In this embodiment of the present application, after receiving downlink data from a network-side device, the radio frequency unit 401 may transmit the downlink data to the processor 410 for processing; and the radio frequency unit 401 may send uplink data to the network-side device. Generally, the radio frequency unit 401 includes, but is not limited to, an antenna, an amplifier, a transceiver, a coupler, a low noise amplifier, and a duplexer.

The memory 409 may be used to store software programs or instructions as well as various data. The memory 409 may mainly include a first storage area for storing programs or instructions and a second storage area for storing data, where the first storage area may store an operating system, an application program or instructions required by at least one function (such as a sound playback function or an image playback function), and the like. In addition, the memory 409 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 409 in the embodiments of the present application includes, but is not limited to, these and any other applicable types of memory.

The processor 410 may include one or more processing units. Optionally, the processor 410 integrates an application processor and a modem processor, where the application processor mainly processes operations involving an operating system, a user interface, and application programs, and the modem processor mainly processes wireless communication signals, such as a baseband processor. It can be understood that the modem processor may alternatively not be integrated into the processor 410.

The processor 410 is configured to determine a haptic signal and metadata of the haptic signal in a case that a first element triggers haptic feedback and execute a first operation based on the haptic signal and the metadata of the haptic signal; where the first element includes at least one of a node and a primitive, and the metadata of the haptic signal includes at least one of the following: actuator information associated with the haptic signal, avatar information associated with the haptic signal, a perception modality associated with the haptic signal, and an amount of attenuation in signal strength of the haptic signal.

It can be understood that, for the implementation processes of the implementations mentioned in this embodiment, reference may be made to the relevant descriptions in the foregoing method embodiment, with the same technical effects achieved. To avoid repetition, details are not repeated herein.

An embodiment of the present application further provides a readable storage medium, where the readable storage medium has stored a program or an instruction thereon. When the program or the instruction is executed by a processor, the processes of the above embodiment of the haptic signal processing method are implemented, with the same technical effects achieved. To avoid repetition, details are not repeated herein.

The processor is the processor in the electronic device described in the above embodiment. The readable storage medium includes a computer readable storage medium, such as a computer read-only memory ROM, a random access memory RAM, a magnetic disk, or an optical disk. In some examples, the readable storage medium may be a non-transitory readable storage medium.

An embodiment of the present application further provides a chip, the chip including a processor and a communication interface. The communication interface is coupled to the processor, and the processor is configured to run a program or an instruction to implement the processes of the above embodiment of the haptic signal processing method, with the same technical effects achieved. To avoid repetition, details are not repeated herein.

It should be understood that the chip mentioned in the embodiments of the present application may also be referred to as a system-level chip, a system chip, a chip system, a system on chip, or the like.

An embodiment of the present application further provides a computer program/program product, where the computer program/program product is stored in a storage medium, and the computer program/program product is executed by at least one processor to implement the processes of the above embodiment of the haptic signal processing method, with the same technical effects achieved. To avoid repetition, details are not repeated herein.

It should be noted that, in this document, the terms "include", "comprise", or any other variants thereof are intended to cover non-exclusive inclusion, so that a process, method, article, or apparatus that includes a series of elements not only includes those elements but also includes other elements that are not explicitly listed, or further includes elements inherent to such process, method, article, or apparatus. Without more limitations, an element defined by the statement "including one..." does not exclude the existence of additional identical elements in the process, method, article, or apparatus that includes the element. In addition, it should be noted that the scope of the methods and apparatuses in the embodiments of the present application is not limited to performing functions in the order shown or discussed, but may also include performing functions in a substantially simultaneous manner or in a reverse order according to the functions involved, for example, the described methods may be performed in an order different from that described, and various steps may also be added, omitted, or combined. Additionally, features described with reference to certain examples may be combined in other examples.

Through the description of the above embodiments, those skilled in the art can clearly understand that the methods of the above embodiments can be implemented by means of a computer software product plus a necessary general hardware platform, and of course, can also be implemented by hardware. The computer software product is stored in a storage medium (such as ROM, RAM, a magnetic disk, or an optical disk), including several instructions to cause a terminal or network-side device to execute the methods described in the embodiments of the present application.

The embodiments of the present application have been described above in conjunction with the drawings, but the present application is not limited to the above specific embodiments, which are merely illustrative and not restrictive. Under the enlightenment of the present application, those of ordinary skill in the art can make many forms of embodiments without departing from the purpose of the present application and the scope protected by the claims, and these embodiments all fall within the protection of the present application.

## Claims

1. A haptic signal processing method, comprising:
determining, by an electronic device, a haptic signal and metadata of the haptic signal in a case that a first element triggers haptic feedback; and
executing, by the electronic device, a first operation based on the haptic signal and the metadata of the haptic signal; wherein
the first element comprises at least one of a node and a primitive, and the metadata of the haptic signal comprises at least one of the following: actuator information associated with the haptic signal, avatar information associated with the haptic signal, a perception modality associated with the haptic signal, and an amount of attenuation in signal strength of the haptic signal.

2. The method according to claim 1, wherein the actuator information associated with the haptic signal comprises actuator information associated with a target element; wherein
the target element comprises the first element or a second element, the second element is an element associated with a first action object, the first action object is an action object corresponding to a trigger condition associated with the first element, and the second element comprises at least one of a node and a primitive.

3. The method according to claim 2, wherein the actuator information associated with the target element comprises one of the following: body part target, actuator target, and actuator resolution;
or
the actuator information associated with the target element comprises a device identifier, wherein the device identifier is used to identify an actuator associated with the target element.

4. The method according to any one of claims 1 to 3, wherein the avatar information associated with the haptic signal comprises avatar information associated with a target element;
or
the avatar information associated with the haptic signal comprises avatar information associated with a haptic scene corresponding to the target element;
or
the avatar information associated with the haptic signal comprises avatar information associated with an upper-level element of the target element; wherein
the target element comprises the first element or a second element, the second element is an element associated with a first action object, the first action object is an action object corresponding to a trigger condition associated with the first element, and the second element comprises at least one of a node and a primitive.

5. The method according to claim 4, wherein the target element is an element in an active status;
or
the avatar information associated with the haptic signal comprises avatar information of an element in an active status associated with a haptic scene corresponding to the target element;
or
the avatar information associated with the haptic signal comprises avatar information of an element in an active status associated with an upper-level element of the target element.

6. The method according to any one of claims 1 to 5, wherein in a case that the first element comprises N elements in an active status, the number of the haptic signals is N, wherein N is a positive integer, the N haptic signals correspond one-to-one with the N elements in an active status, and the avatar information associated with each haptic signal is avatar information of an element in an active status corresponding to that haptic signal.

7. The method according to claim 5 or 6, wherein the element being in an active status comprises at least one of the following:
the element is in a first active status, wherein the first active status is used to indicate that the element is applicable to a haptic scene;
the element is in a second active status, wherein the second active status is used to indicate that the element is applicable to triggering haptic feedback; and
the element is in a third active status, wherein the third active status is used to indicate that the element is applicable to executing a haptic feedback action.

8. The method according to any one of claims 5 to 7, wherein the status of the element is set through a second action object, wherein the second action object is used to activate the element or deactivate the element.

9. The method according to any one of claims 1 to 8, wherein the perception modality associated with the haptic signal comprises a perception modality associated with a target element;
or
the perception modality associated with the haptic signal comprises a perception modality associated with a haptic scene corresponding to the target element;
or
the perception modality associated with the haptic signal comprises a perception modality associated with an upper-level element of the target element; wherein
the target element comprises the first element or a second element, the second element is an element associated with a first action object, the first action object is an action object corresponding to a trigger condition associated with the first element, and the second element comprises at least one of a node and a primitive.

10. The method according to claim 9, wherein the perception modality associated with the haptic signal comprises a perception modality in an active status associated with the target element;
or
the perception modality associated with the haptic signal comprises a perception modality in an active status associated with a haptic scene corresponding to the target element;
or
the perception modality associated with the haptic signal comprises a perception modality in an active status associated with an upper-level element of the target element.

11. The method according to any one of claims 1 to 10, wherein, in a case that there are M perception modalities in an active status among perception modalities associated with a target element, the number of the haptic signals is M, wherein M is a positive integer, the M haptic signals correspond one-to-one with the M perception modalities in an active status, and the perception modality associated with each haptic signal is a perception modality in an active status corresponding to that haptic signal.

12. The method according to claim 10 or 11, wherein the status of the perception modality is set through a third action object, wherein the third action object is used to activate or deactivate the perception modality.

13. The method according to any one of claims 1 to 12, wherein, in the case that the first element has triggered haptic feedback, before the electronic device determines the haptic signal and the metadata of the haptic signal, the method further comprises:
determining, by the electronic device, a status of a first behavior object, wherein the first behavior object comprises a first trigger condition and a first action object, and the first trigger condition is a trigger condition associated with the first element; and
determining, by the electronic device, whether to apply the first behavior object based on the status of the first behavior object.

14. The method according to claim 13, wherein the status of the first behavior object is determined based on a status identifier associated with the first behavior object, wherein the status identifier is used to identify an active status or an inactive status;
or
the status of the first behavior object is determined based on at least one of the status of the first trigger condition and the status of the first action object.

15. The method according to claim 14, wherein the status of the first trigger condition is determined based on a status identifier associated with the first trigger condition, or based on a status identifier that is associated with an element associated with the first trigger condition;
or
the status of the first action object is determined based on a status identifier of the first action object, or based on a status identifier that is associated with an element associated with the first action object; wherein
the status identifier is used to identify an active status or an inactive status.

16. The method according to claim 14 or 15, wherein the status of the first behavior object is set through a fourth action object, wherein the fourth action object is used to activate or deactivate a behavior object;
or
the status of the first trigger condition is set through a fifth action object, wherein the fifth action object is used to activate or deactivate a trigger condition;
or
the status of the first action object is set through a sixth action object, wherein the sixth action object is used to activate or deactivate an action object;
or
the status of the element is set through a seventh action object, wherein the seventh action object is used to activate or deactivate an element.

17. The method according to claim 13, wherein the status of the first behavior object is determined based on a status of a perception modality corresponding to the first behavior object;
or
the status of the first behavior object is determined based on a perception modality corresponding to the first trigger condition and a perception modality corresponding to the first action object, or the status of the first behavior object is determined based on a perception modality in an active status corresponding to the first trigger condition and a perception modality in an active status corresponding to the first action object.

18. The method according to claim 17, wherein the perception modality corresponding to the first behavior object is a perception modality corresponding to a haptic scene associated with the first behavior object.

19. The method according to claim 17 or 18, wherein the status of the perception modality corresponding to the first behavior object is determined based on a status identifier associated with the perception modality corresponding to the first behavior object.

20. The method according to any one of claims 17 to 19, wherein, in a case that all perception modalities corresponding to the first behavior object are in an inactive status, the first behavior object is in an inactive status.

21. The method according to claim 17, wherein, in a case that the perception modality corresponding to the first trigger condition is the same as the perception modality corresponding to the first action object, the first behavior object is in an active status; and in a case that the perception modality in an active status corresponding to the first trigger condition is different from the perception modality in an active status corresponding to the first action object, the first behavior object is in an inactive status;
or
in a case that the perception modality in an active status corresponding to the first trigger condition is the same as the perception modality in an active status corresponding to the first action object, the first behavior object is in an active status; and in a case that the perception modality in an active status corresponding to the first trigger condition is different from the perception modality in an active status corresponding to the first action object, the first behavior object is in an inactive status.

22. The method according to claim 21, wherein the status of the perception modality corresponding to the first trigger condition is determined based on a status identifier of the perception modality corresponding to the first trigger condition;
or
the status of the perception modality corresponding to the first trigger condition is determined based on a status identifier of a perception modality that corresponds to an element corresponding to the first trigger condition.

23. The method according to any one of claims 1 to 22, wherein a third element is associated with at least one of the following: attenuation related parameters of the haptic signal and propagation distance related parameters of the haptic signal; wherein
the third element comprises at least one element of a haptic source or at least one element of a haptic scene.

24. The method according to claim 23, wherein the attenuation related parameters comprise an attenuation identifier, wherein the attenuation identifier is used to indicate that the signal strength of the haptic signal attenuates with distance.

25. The method according to claim 23 or 24, wherein there is an association relationship between the attenuation related parameters and a perception modality.

26. The method according to any one of claims 23 to 25, wherein an amount of attenuation in signal strength of the haptic signal is determined based on an attenuation model or an attenuation formula, wherein the attenuation model or attenuation formula is agreed upon by a protocol.

27. The method according to any one of claims 23 to 26, wherein the propagation distance related parameters comprise an upper limit value of propagation distance of the haptic signal, wherein the upper limit value of propagation distance is used to indicate a maximum propagation distance of the haptic signal.

28. The method according to any one of claims 1 to 27, wherein a trigger condition associated with the first element is a proximity condition, a second element comprises a proximity use identifier, the second element comprises at least one element in a first action object, and the first action object is an action object corresponding to the trigger condition associated with the first element; wherein
the proximity use identifier is used to indicate whether the electronic device triggers haptic feedback based on an element located within a distance range defined by the proximity condition.

29. The method according to any one of claims 1 to 28, wherein a trigger condition associated with the first element is a collision condition, an element list corresponding to the collision condition comprises at least two elements, each of the at least two elements is associated with a type identifier or a first identifier, and the first identifier associated with each element is respectively an identifier of an upper-level element of that element; wherein
in a case that elements associated with different type identifiers or first identifiers among the at least two elements collide, the collision condition is determined to be satisfied.

30. The method according to any one of claims 1 to 28, wherein a trigger condition associated with the first element is a collision condition, the collision condition corresponds to at least two element groups, each element group comprises at least one element, wherein, in a case that elements between different element groups among the at least two element groups collide, the collision condition is determined to be satisfied.

31. The method according to any one of claims 1 to 28, wherein a trigger condition associated with the first element is a collision condition, the collision condition corresponds to at least two elements, and in a case that lower-level elements of different elements among the at least two elements collide, the collision condition is determined to be satisfied.

32. The method according to any one of claims 1 to 31, wherein the executing, by the electronic device, a first operation based on the haptic signal and the metadata of the haptic signal comprises:
controlling, by the electronic device, playback of the haptic signal based on the metadata of the haptic signal.

33. A haptic signal processing apparatus, comprising:
a first determination module, configured to determine a haptic signal and metadata of the haptic signal in a case that a first element triggers haptic feedback; and
an execution module, configured to execute a first operation based on the haptic signal and the metadata of the haptic signal; wherein
the first element comprises at least one of a node and a primitive, and the metadata of the haptic signal comprises at least one of the following: actuator information associated with the haptic signal, avatar information associated with the haptic signal, a perception modality associated with the haptic signal, and an amount of attenuation in signal strength of the haptic signal.

34. An electronic device, comprising a processor and a memory, wherein the memory stores a program or an instruction capable of running on the processor, and when the program or the instruction is executed by the processor, the steps of the haptic signal processing method according to any one of claims 1 to 32 are implemented.

35. A readable storage medium, wherein a program or an instruction is stored in the readable storage medium, and when the program or the instruction is executed by a processor, the steps of the haptic signal processing method according to any one of claims 1 to 32 are implemented.
